(19) Europäisches Patentamt

European Patent Office

Office européen des brevets

(11) **EP 0 943 217 B1**

(12) **EUROPEAN PATENT SPECIFICATION**

(45) Date of publication and mention
of the grant of the patent:
**08.03.2006 Bulletin 2006/10**

(51) Int Cl.:
***H04Q 7/34*** (2006.01)

(21) Application number: **97954735.3**

(22) Date of filing: **25.11.1997**

(86) International application number:
**PCT/EP1997/006939**

(87) International publication number:
**WO 1998/025425 (11.06.1998 Gazette 1998/23)**

(54) **OPERATIONS AND MAINTENANCE PROCESSOR DEVICE FOR A RADIO COMMUNICATIONS SYSTEM**

PROZESSOREINRICHTUNG ZUM BETRIEB UND ZUR WARTUNG EINES
FUNKKOMMUNIKATIONSSYSTEMS

SYSTEME DE PROCESSEUR DE TRAITEMENT ET DE MAINTENANCE POUR SYSTEMES DE
RADIOCOMMUNICATION

(84) Designated Contracting States:
**AT BE CH DE DK ES FI FR GB GR IE IT LI LU NL
PT SE**

(30) Priority: **06.12.1996 NL 1004718**

(43) Date of publication of application:
**22.09.1999 Bulletin 1999/38**

(73) Proprietor: **Koninklijke KPN N.V.
9726 AE Groningen (NL)**

(72) Inventors:
• **GLAS, Robert, Klaas
NL-2805 DL Gouda (NL)**
• **TUINSTRA, Franciscus, Libertus
NL-2274 GZ Voorburg (NL)**

(74) Representative: **Wuyts, Koenraad Maria et al
Koninklijke KPN N.V.,
Intellectual Property Group,
P.O. Box 95321
2509 CH Den Haag (NL)**

(56) References cited:
**WO-A-92/21182**

• **BERG G: "OPERATIONS SUPPORT SYSTEM FOR
CME 20" ERICSSON REVIEW, vol. 71, no. 1, 1994,
STOCKHOLM SE, pages 32-39, XP000429342**

**Description**

BACKGROUND OF THE INVENTION

The invention refers to a telecommunication system comprising at least a first telecommunication node defined by a first code, a second telecommunication node defined by a second code, and a processor device, arranged for being linked with the telecommunication nodes for transmitting a first parameter signal in the direction of the first telecommunication node, and a second parameter signal in the direction of the second telecommunication node, said processor device being provided with a memory facility comprising at least a first memory field relating to the first code, and a second memory field relating to the second code for storing, at a first location in the first memory field, a first administrative signal, storing, at a second location in the first memory field, a first further code that defines a telecommunication node located in the vicinity of the first telecommunication node, storing, at a first location in the second memory field, a second administrative signal, and storing, at a second location in the second memory field, a second further code that defines a telecommunication node located in the vicinity of the second telecommunication node.

Such a telecommunication system is generally known and refers to e.g. a mobile telecommunication system, in which the first telecommunication node is e.g. a first base station, and the second telecommunication node is e.g. a second base station. The processor device that can be linked with the base stations refers to e.g. a so-called OMC (Operational Maintenance Centre), or forms e.g. part of an MSC (Mobile Switching Centre) or an LE (Local Exchange).

Said processor device includes a memory facility comprising at least a first memory field relating to the first code, and a second memory field relating to the second code, for the purpose of storing in the first memory field (at a first location) a first administration signal, and storing (at a second location) a first further code defining a telecommunication node (a so-called neighbouring node) located in the vicinity of the first telecommunication node, and for the purpose of storing in the second memory field (at a first location) a second administration signal, and storing (at a second location) a second further code defining a telecommunication node (a so-called neighbouring node) located in the vicinity of the second telecommunication node. By linking this memory facility with a visual display unit, the stored signals can be displayed, enabling human intervention to take place in the event of e.g. calamities. Said intervention takes place through the processor device by transmitting a first parameter signal in the direction of the first telecommunication node, and a second parameter signal in the direction of the second telecommunication node.

The transmission of a certain parameter signal in the direction of a certain telecommunication node includes both the actual possibility of transmitting the certain parameter signal to the certain telecommunication node and the possibility of transmitting the certain parameter signal to a control node located between the certain telecommunication node and the processor device, for the benefit of the certain telecommunication node that is at that time being controlled by the control node. Such a control node refers to e.g. a BSC (Base Station Controller).

One of the disadvantages of such a telecommunication system is that the telecommunication nodes are set (either directly or indirectly via the control nodes) by selecting so-called standard values for the parameters, which on average result in fair settings for the telecommunication nodes, but which, depending on the situation, sometimes result in settings for each separate node that are far from ideal.

Said disadvantage also holds true for a system known from WO-A-9221182, disclosing a reconfiguration method for cellular radio communications network, involving storing cell parameters and preparing set of proposed changes for verification before introducing verified changes into network. The method involves copying cell parameters of affected radio network controlling units in a cellular network to a database and storing the copied parameters. A set of proposed changes to the stored parameters is prepared. The consistency of the prepared set of proposed changes is then verified and any necessary alterations to the set of proposed changes are made in response to the verification. The verified set of proposed changes is copied to the affected radio network controlling units. Finally the verified set of proposed changes in introduced into the network. Provides network reconfiguration when necessary e.g. due to permanent or temporary growth, decrease in traffic, equipment malfunction or engineering changes. Reconfiguration can occur automatically without human intervention e.g. when base station malfunction alarm triggers.

SUMMARY OF THE INVENTION

One of the purposes of the invention is to provide a telecommunication system of the type referred to in the preamble, in which the adjustment of telecommunication nodes is improved by selecting better values for the parameters relating to each telecommunication node.

For this purpose, the telecommunication system according to the invention is characterized in that the processor device is provided with a processor for calculating the first parameter signal as a function of at least the first administrative signal and a first signal, being related to the telecommunication node located in the vicinity of said first telecommunication node, that is stored in a memory field relating to the first further code, and the second parameter signal as a function of at least the second administrative signal and a second signal, being related to the telecommunication node located in the vicinity of said first telecommunication node, that is stored in a memory field relating to the second further code, said first and second parameter signals being signals for setting the transmission power of the first and second telecommunication nodes, respectively.

The incorporation into the processor device of the processor for calculating the first parameter signal for the first telecommunication node as a function of at least the first administrative signal (which relates to the first telecommunication node) and a first signal (which relates to a neighbouring node) which is stored in a memory field relating to the first further code, and for calculating the second parameter signal for the second telecommunication node as a function of at least the second administrative signal (which relates to the second telecommunication node) and a second signal (which relates to a neighbouring node) which is stored in a memory field relating to the second further code, enables the processor to calculate a parameter signal for each telecommunication node, depending on an administrative signal and a signal relating to a neighbouring node, said parameter signal comprising parameters that result in a considerably improved adjustment of the telecommunication node in question.

The invention is based, among other things, on the fact that the many (20 to 100) parameters required for adjusting a telecommunication node can be calculated by a processor by using a so-called tool that is based on administrative signals and signals relating to neighbouring nodes.

In this way, the problem in the telecommunication system of the setting that, depending on the situation, may be far from ideal for each separate telecommunication node, is solved by having the processor calculate parameter signals depending on administrative signals and signals relating to neighbouring nodes.

A first embodiment of the telecommunication system according to the invention is characterized in that the processor device is designed for the reception of a first measuring result signal from the direction of the first telecommunication node, and a second measuring result signal from the direction of the second telecommunication node, the memory facility being designed for

storing the first measuring result signal in the first memory field at a third location,

storing the second measuring result signal in the second memory field at a third location,

and the processor being designed for the calculation of

the first parameter signal additionally as a function of at least the first measuring result signal, and

the second parameter signal additionally as a function of at least the second measuring result signal.

The storage of the measuring result signal relating to the first telecommunication node in the first memory field (at the third location) and the storage of the measuring result signal relating to the second telecommunication node in the second memory field (at the third location) enables the processor to calculate a parameter signal for each telecommunication node that depends on a current traffic situation.

The originating of a certain measuring result signal from the direction of a certain telecommunication node includes both the actual possibility of the certain measuring result signal originating from the certain telecommunication node and the possibility of the certain measuring result signal originating from a control node located between the certain telecommunication node and the processor device, said signal relating to the certain telecommunication node that is at that time being controlled by the control node. Such a control node refers to e.g. a BSC (Base Station Controller).

A second embodiment of the telecommunication system according to the invention is characterized in that the first measuring result signal comprises at least first handover information, the second measuring result signal comprising at least second handover information.

By having the first measuring result signal comprise at least first handover information, and having the second measuring result signal comprise at least second handover information, the processor will calculate for each telecommunication node a parameter signal that depends e.g. on a handover success rate.

A third embodiment of the telecommunication system according to the invention is characterized in that the first parameter signal is at least a function of first coverage information derived from the first administrative signal, the second parameter signal being at least a function of second coverage information derived from the second administrative signal.

By having the first parameter signal be at least a function of first coverage information derived from the first administrative signal, and having the second parameter signal be at least a function of second coverage information derived from the second administrative signal, the processor will calculate for each telecommunication node a parameter signal that depends e.g. on a derived/calculated field strength.

A fourth embodiment of the telecommunication system according to the invention is characterized in that the first administrative signal comprises at least first aerial information, the second parameter signal comprising at least second aerial information.

By having the first administrative signal comprise at least first aerial information, and having the second parameter signal comprise at least second aerial information, the processor will calculate for each telecommunication node a parameter signal that depends e.g. on an aerial direction and/or an aerial height and/or an aerial type.

The combination of the embodiments described in the above will of course yield further benefits.

The invention furthermore comprises a processor device arranged for being linked to at least a first telecommunication node defined by a first code, and to at least a second telecommunication node defined by a second code for transmitting a first parameter signal in the direction of the first telecommunication node, and a second parameter signal in the direction of the second telecommunication node, said processor device being provided with a memory facility comprising at least a first memory field relating to the first code, and a second memory field related with the second code for storing a first administrative signal in the first memory field at a first location, for storing, in the first memory field at a second location, a first further code defining a telecommunication node located in the vicinity of the first telecommunication node, for storing a second administrative signal in the second memory field at a first location, and for storing, in the second memory field at a second location, a second further code defining a telecommunication node located in the vicinity of the second telecommunication node.

The processor device according to the invention is characterized in that the processor device is provided with a processor for calculating the first parameter signal as a function of at least the first administrative signal and a signal that is stored in a memory field relating to the first further code, and the second parameter signal as a function of at least the second administrative signal and a second signal that is stored in a memory field relating to the second further code, said first and second parameter signals being signals for setting the transmission power of the first and second telecommunication nodes, respectively.

A first embodiment of the processor device according to the invention is characterized in that the processor device is designed for the reception of a first measuring result signal from the direction of the first telecommunication node and a second measuring result signal from the direction of the second telecommunication node, the memory facility being designed for

storing, at a third location in the first memory field, the first measuring result signal,

storing, at a third location in the second memory field, the second measuring result signal,

the processor being designed for the calculation of

the first parameter signal as a function of at least the first measuring result signal, and

the second parameter signal as a function of at least the second measuring result signal.

A second embodiment of the processor device according to the invention is characterized in that the first measuring result signal comprises at least first handover information, the second measuring result signal comprising at least second handover information.

A third embodiment of the processor device according to the invention is characterized in that the first parameter signal is at least a function of coverage information derived from the first administrative signal, the second parameter signal being at least a function of coverage information derived from the second administrative signal.

A fourth embodiment of the processor device according to the invention is characterized in that the first administrative signal comprises at least first aerial information, the second administrative signal comprising at least second aerial information.

A Exemplary embodiment

The invention will be explained in greater detail by means of an exemplary embodiment shown in the drawings. Said drawings contain the following figures:

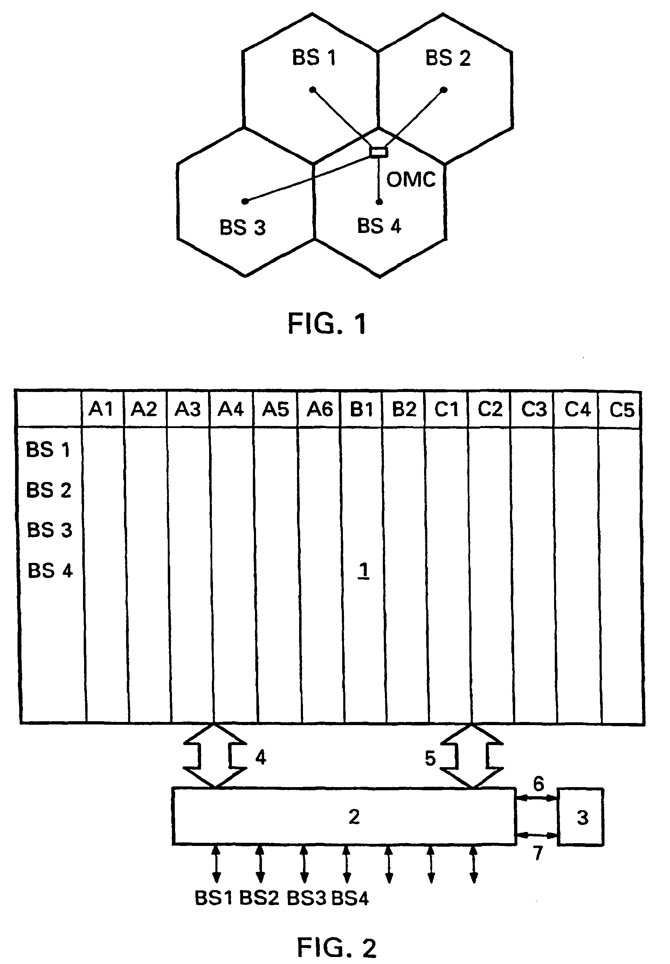

Figure 1, showing a telecommunication system according to the invention, comprising four hexagonal cells, and figure 2, showing a processor device (e.g. an OMC or Operational Maintenance Centre) according to the invention.

The telecommunication system according to the invention shown in figure 1 comprises four hexagonal cells, each of which is provided with a telecommunication node. The first telecommunication node is defined by a code, e.g. BS1, and comprises e.g. a first base station, BS1. The second telecommunication node is defined by a code, e.g. BS2, and comprises e.g. a second base station, BS2. The third telecommunication node is defined by a code, e.g. BS3, and comprises e.g. a third base station, BS3. The fourth telecommunication node is defined by a code, e.g. BS4, and comprises e.g. a fourth base station, BS4. The base stations, BS2-BS4, are connected to a processor device (e.g. an OMC or Operational Maintenance Centre) according to the invention, said processor device being shown in further detail in figure 2 and having the purpose of transmitting a first parameter signal in the direction of the first base station, BS1, and of transmitting a second parameter signal in the direction of the second base station, BS2, and of transmitting a third parameter signal in the direction of the third base station, BS3, and of transmitting a fourth parameter signal in the direction of the fourth base station, BS4.

The transmission of a certain parameter signal in the direction of a certain telecommunication node (BS1-BS4) includes both the actual possibility of transmitting the certain parameter signal to the certain telecommunication node (BS1-BS4) and the possibility of transmitting the certain parameter signal to a control node located between the certain telecommunication node (BS1-BS4) and the processor device (OMC), for the benefit of the certain telecommunication node (BS1-BS4) that is at that time being controlled by the control node. For the sake of simplicity, such control nodes (e.g. a BSC or Base Station Controller) are not shown in the figures, and this exemplary embodiment will assume that the certain parameter signal is being transmitted to the certain telecommunication node (BS1-BS4).

The processor device according to the invention shown in figure 2 comprises a memory facility 1 which is linked to a processor 2 van an address bus 4 and a data bus 5, said processor being linked to a working memory 3 via an address link 6 and a data link 7. The processor 2 is provided with a first input/output port to link it to the first base station, BS1, for the purpose of transmitting the first parameter signal in the direction of the first base station, BS1, and with a second input/output port to link it to the second base station, BS2, for the purpose of transmitting the second parameter signal in the direction of the second base station, BS2, and with a third input/output port to link it to the third base station, BS3, for the purpose of transmitting the third parameter signal in the direction of the third base station, BS3, and with a fourth input/output port to link it to the fourth base station, BS4, for the purpose of transmitting the fourth parameter signal in the direction of the fourth base station, BS4, and with a fifth, sixth and seventh input/output port.

The memory facility 1 is provided with a first memory field consisting of a first row and relating to the first code, BS1, and is provided with a second memory field consisting of a second row and relating to the second code, BS2, and is provided with a third memory field consisting of a third row and relating to the third code, BS3, and is provided with a fourth memory field consisting of a fourth row and relating to the fourth code, BS4, etc. In the first memory field, at a first location indicated by six columns A1-A6 a first administrative signal is stored, and at a second location indicated by two columns B1-B2 a first further code defining a telecommunication node located in the vicinity of the first base station, BS1, (e.g. a so-called neighbouring base station), is stored, and at a third location indicated by five columns C1-C5 a first measuring result signal received from the direction of the first base station, BS1, is stored. In the second memory field, at a first location indicated by six columns A1-A6 a second administrative signal is stored, and at a second location indicated by two columns B1-B2 a second further code defining a telecommunication node located in the vicinity of the second base station, BS2, (e.g. a so-called neighbouring base station), is stored, and at a third location indicated by five columns C1-C5 a second measuring result signal received from the direction of the second base station, BS2, is stored. The third and fourth and any further memory fields are assigned in a similar manner.

The originating of a certain measuring result signal from the direction of a certain telecommunication node (BS1-BS4) involves both the actual possibility of the certain measuring result signal originating from the certain telecommunication node (BS1-BS4) and the possibility of the certain measuring result signal originating from a control node located between the certain telecommunication node (BS1-BS4) and the processor device (OMC), said signal relating to the certain telecommunication node (BS1-BS4) that is at that time being controlled by the control node. For the sake of simplicity, such control nodes (e.g. a BSC or Base Station Controller) are not shown in the figures, and this exemplary embodiment will assume that the certain parameter signal originates from the certain telecommunication node (BS1-BS4).

The administrative signal to be placed in the columns A1-A6 comprises e.g. the geographical coordinate of the base station in question (column A1), the aerial height (column A2), and the aerial direction (column A3), and the output power (column A4) of the base station in question, as well as the cell type (column A5) in which the base station in question is located. The administrative signal to be placed in the columns B1-B6 comprises e.g. the geographical coordinate of a certain neighbouring base station (column B1), said code determining the certain memory field in which the administrative signal and the further code and the measuring signal of said certain base station are stored
The measuring result signal to be placed in the columns C1-C5 comprises e.g. an absolute handover success rate (column C1) and a handover class (column C2) and a traffic measurement (column C3) relating to the base station in question.

The operation of a simple version and a more advanced version of the processor device shown in figure 2 is as follows. For the simple version, a memory facility 1 filled according to table 1 is used, due to the fact that according to this simple version, parameter signals are a function of administrative signals and signals that are stored in memory fields relating to further codes, and that these parameter signals are therefore not a function of measuring result signals. In the more advanced version, a memory facility filled according to tables 1 and 2 is used, due to the fact that according to this more advanced version, parameter signals are a function of administrative signals and signals that are stored in memory fields relating to further codes, and that these parameter signals in addition are a function of measuring result signals.

Table 1

|  | A1 | A2 | A3 | A4 | A5 | A6 | B1 | B2 |
|---|---|---|---|---|---|---|---|---|
| BS1 | 6,7 | 20 | 100° | 8.0 | H |  | 2-3-4 |  |
| BS2 | 8,7 | 30 | 210° | 6.0 | M |  | 1-3-4 |  |
| BS3 | 5,5 | 26 | 350° | 7.0 | L |  | 1-2-4 |  |
| BS4 | 7,5 | 30 | 240° | 6.0 | M |  | 1-2-3 |  |

Table continued

|  | A1 | A2 | A3 | A4 | A5 | A6 | B1 | B2 |
|---|---|---|---|---|---|---|---|---|
|  |  |  |  |  |  |  |  |  |

Table 2

|  | C1 | C2 | C3 | C4 | C5 |
|---|---|---|---|---|---|
| BS1 | 0,74 | 4 | 13.4 |  |  |
| BS2 | 0,86 | 1 | 6.7 |  |  |
| BS3 | 0,93 | 1 | 7.2 |  |  |
| BS4 | 0,88 | 1 | 10.2 |  |  |
|  |  |  |  |  |  |

As can be deduced from table 1, the first column, A1, contains the geographical coordinates of the four base stations. The first base station, BS1, is located at coordinates x=6,y=7, the second base station, BS2, is located at coordinates x=8,y=7, the third base station, BS3, is located at coordinates x=5,y=5, and the fourth base station, BS4, is located at coordinates x=7,y=5. The second column of table 1 comprises the aerial heights of the four base stations. The first base station, BS1, has an aerial height of 20 metres, the second base station, BS2, has an aerial height of 30 metres, the third base station, BS3, has an aerial height of 26 metres, and the fourth base station, BS4, has an aerial height of 30 metres. The third column, A3, of table 1 comprises the aerial directions of the four base stations: the first base station, BS1, is equipped with one or more aerials that combine to transmit in the main direction of 100°, the second base station, BS2, is equipped with one or more aerials that combine to transmit in the main direction of 210°, the third base station, BS3, is equipped with one or more aerials that combine to transmit in the main direction of 350°, and the fourth base station, BS4, is equipped with one or more aerials that combine to transmit in the main direction of 240°. The fourth column, A4, of table 1 comprises the output power of the four base stations. The first base station, BS1, has an output power of 8.0 watts, the second base station, BS2, has an output power of 6.0 watts, the third base station, BS3, has an output power of 7.0 watts, and the fourth base station, BS4, has an output power of 6.0 watts. The fifth column, A5, of table 1 comprises the cell types to which the four base stations belong. The first base station, BS1, is located in a high power cell, the second base station, BS2, is located in a medium power cell, the third base station, BS3, is located in a low power cell, and the fourth base station, BS4, is located in a medium power cell. The sixth column, A6, of table 1 in this example contains no data yet, but it could be filled with further administrative data known to a person skilled in the art, e.g. a type of aerial (a sector aerial with the sector it covers, or an omnidirectional aerial). The seventh column, B1, of table 1 comprises the codes of the neighbouring base stations of the four base station. The first base station, BS1, has the three base stations, BS??2??, BS3, and BS4 as its neighbours, the second base station, BS2, has the three base stations, BS1, BS3, and BS4 as its neighbours, the third base station, BS3, has the three base stations, BS1, BS2, and BS4 as its neighbours, and the fourth base station, BS4, has the three base stations, BS1, BS2, and BS3 as its neighbours. The eight column, B2, of table 1 in this example comprises no data yet, but it could be filled with further neighbour data known to a person skilled in the art.

As can be deduced from table 2, the first column, C1, comprises the absolute handover success rate of the four base stations. The first base station, BS1, has an absolute handover success rate of 74/100, the second base station, BS2, has an absolute handover success rate of 86/100, the third base station, BS3, has an absolute handover success rate of 93/100, and the fourth base station, BS4, has an absolute handover success rate of 88/100. The second column, C2, of table 2 comprises handover classes of the four base stations. The favourite handover partner of the first base station, BS1, is the fourth base station, BS4, while the second base station, BS2, the third base station, BS3, and the fourth base station, BS4, each have the first base station, BS1, as their favourite handover partner. The third column, C3, comprises traffic measurements of the four base stations. For the first base station, BS1, the traffic measurement is 13.4 erlang, for the second base station, BS2, the traffic measurement is 6.7 erlang, for the third base station, BS3, the traffic measurement is 7.2 erlang, and for the fourth base station, BS4, the traffic measurement is 10.2 erlang. In this example, the fourth column, C4, and the fifth column, C5, contain no data yet, but they could be filled with further measuring result data known to a person skilled in the art, e.g. relative handover success rates (i.e. handover success rates between two base stations) and further handover classes (relating to the second and third favourite handover partner etc.).

In the case of the simple version of the processor device shown in figure 2, parameter signal could be calculated as follows, using a memory facility filled according to table 1.

The first parameter signal, destined for the first base station, BS1, could for example be determined as follows. Column B1 of table 1 shows that the second base station, BS2, and the third base station, BS3, and the fourth base station, BS4, are neighbouring base stations to the first base station, BS1. As a result of this, for each base station, the aerial height (column A2) in metres is for example divided by ten and multiplied by the output power (column A4) in watts, and divided by the distance (from column A1) in units from the first base station, after which the sum total of the three resulting figures is divided by three, and the result is compared with the output power of the first base station, BS1. The result then is:

$$[(3 \times 6.0)/(4+0)^{0.5} + (2.6 \times 7.0)/(1+4)^{0.5} + (3 \times 6.0)/(1+4)^{0.5}]/3 = 8.4$$

As this result exceeds the output power of the first base station, BS1, (which has an output power of 8.0 watts) by 5%, a first parameter signal of e.g. BS1.A4(+2.5%) is composed, which implies that the output power of the first base station, BS1, should be increased by 0.2 watts to 8.2 watts.

The second parameter signal, destined for the second base station, BS2, could for example be determined as follows. Column B1 of table 1 shows that the first base station, BS1, and the third base station, BS3, and the fourth base station, BS4, are neighbouring base stations to the second base station, BS2. As a result of this, for each base station, the aerial height (column A2) in metres is for example divided by ten and multiplied by the output power (column A4) in watts, and divided by the distance (from column A1) in units from the second base station, after which the sum total of the three resulting figures is divided by three, and the result is compared with the output power of the second base station, BS2. The result then is:

$$[(2 \times 8.0)/(4+0)^{0.5} + (2.6 \times 7.0)/(9+4)^{0.5} + (3 \times 6.0)/(1+4)^{0.5}]/3 = 7.0$$

As this result exceeds the output power of the second base station, BS2, (which has an output power of 6.0 watts) by 17%, a second parameter signal of e.g. BS2.A4(+8.5%) is composed, which implies that the output power of the second base station, BS2, should be increased by approximately 0.5 watts to 6.5 watts.

The third parameter signal, destined for the third base station, BS3, could for example be determined as follows. Column B1 of table 1 shows that the first base station, BS1, and the second base station, BS2, and the fourth base station, BS4, are neighbouring base stations to the third base station, BS3. As a result of this, for each base station, the aerial height (column A2) in metres is for example divided by ten and multiplied by the output power (column A4) in watts, and divided by the distance (from column A1) in units from the third base station, after which the sum total of the three resulting figures is divided by three, and the result is compared with the output power of the third base station, BS3. The result then is:

$$[(2 \times 8.0)/(1+4)^{0.5} + (3 \times 6.0)/(9+4)^{0.5} + (3 \times 6.0)/(4+0)^{0.5}]/3 = 7.0$$

As this result is approximately the same as the output power of the third base station, BS3, (which has an output power of 7.0 watts), either a third parameter signal of e.g. BS3.A4(+0%) is composed, which implies that the output power of the third base station, BS3, should be increased by approximately 0 watts, or no third parameter signal is composed.

The fourth parameter signal, destined for the fourth base station, BS4, could for example be determined as follows. Column B1 of table 1 shows that the first base station, BS1, and the second base station, BS2, and the third base station, BS3, are neighbouring base stations to the fourth base station, BS4. As a result of this, for each base station, the aerial height (column A2) in metres is for example divided by ten and multiplied by the output power (column A4) in watts, and divided by the distance (from column A1) in units from the fourth base station, after which the sum total of the three resulting figures is divided by three, and the result is compared with the output power of the fourth base station, BS4. The result then is:

$$[(2 \times 8.0)/(1+4)^{0.5} + (3 \times 6.0)/(1+4)^{0.5} + (2.6 \times 7.0)/(4+0)^{0.5}]/3 = 8.1$$

As this result exceeds the output power of the fourth base station, BS4, (which has an output power of 6.0 watts) by approximately 35%, a fourth parameter signal of e.g. BS4.A4(+17.5%) is composed, which implies that the output power of the fourth base station, BS4, should be increased by approximately 1.0 watt to 7.0 watts.

Of course, many alternatives to the above can be envisaged. For instance, the four parameter signals, instead of being instantaneously transmitted to the four base stations, could also be transmitted after some delay, each of the four calculations possibly being performed several times, taking into account the adjusted output powers. The output powers could also be adjusted in any way other than the described above, e.g. by adjusting the output power, depending on the percentage calculated, with a fixed value, or e.g. by adjusting the output power only if the percentage calculated exceeds a certain threshold value: Furthermore, the geographical coordinates included in column A1 and the aerial heights included in column A2 and the output powers included in column A4 could be included in any other manner in the calculations described above, e.g. by, instead of dividing the sum total of the three figures obtained by three, dividing each of the three figures obtained by a factor depending on the information included in column A3 and in column A5. Finally, the information yet to be placed in column A6 and in column B2 could be included in any manner in the calculations described above.

The description above applies only to parameter signals used to adjust output powers. In a similar manner however, further parameter signals can be envisaged which make possible adjustments in e.g. so-called handover margins (field strength threshold values that determine when a handover becomes necessary), measuring times (times at which a base station starts to measure a mobile terminal), and terminal output powers (the output power of a terminal that is set by a base station).

In the case of the more advanced version of the processor device shown in figure 2, the parameter signals could be calculated as follows, using a memory facility filled according to tables 1 and 2.

The first parameter signal, destined for the first base station, BS1, could for example be determined as follows. Column B1 of table 1 shows that the second base station, BS2, and the third base station, BS3, and the fourth base station, BS4, are neighbouring base stations to the first base station, BS1. As a result of this, for each of the neighbouring base stations, the aerial height (column A2) in metres is divided by ten and multiplied by the output power (column A4) in watts and divided by the distance (from column A1) in units from the first base station, each of the three figures obtained then being multiplied with the ratio of the handover success rates (column C1) of the neighbouring base station in question relative to those of the first base station, BS1, and with the ratio of the traffic measurements (column C3) of the first base station, BS1, relative to those of the neighbouring base station in question, after which the sum total of the three figures thus obtained is divided by three, and the result is compared with the output power of the first base station, BS1. The result then is:

$$[(3 \times 6.0)/(4+0)^{0.5} \times (0.86/0.74) \times (13.4/6.7) +$$
$$(2.6 \times 7.0)/(1+4)^{0.5} \times (0.93/0.74) \times (13.4/7.2) +$$
$$(3 \times 6.0)/(1+4)^{0.5} \times (0.88/0.74) \times (13.4/10.2)]/3 = 17.5$$

As this result exceeds the output power of the first base station, BS1, (which has an output power of 8.0 watts) by more than 20%, a first parameter signal is composed of e.g. BS1.A4(+20%), which implies that the output power of the first base station, BS1, must be increased by 1.6 watts to 9.6 watts.

The second parameter signal, destined for the second base station, BS2, could for example be determined as follows. Column B1 of table 1 shows that the first base station, BS1, and the third base station, BS3, and the fourth base station, BS4, are neighbouring base stations to the second base station, BS2. As a result of this, for each of the neighbouring base stations, the aerial height (column A2) in metres is divided by ten and multiplied by the output power (column A4) in watts and divided by the distance (from column A1) in units from the second base station, each of the three figures obtained then being multiplied with the ratio of the handover success rates (column C1) of the neighbouring base station in question relative to those of the second base station, BS2, and with the ratio of the traffic measurements (column C3) of the second base station, BS2, relative to those of the neighbouring base station in question, after which the sum total of the three figures thus obtained is divided by three, and the result is compared with the output power of the second base station, BS2. The result then is:

$$[(2 \times 8.0)/(4+0)^{0.5} \times (0.74/0.86) \times (6.7/13.4) +$$
$$(2.6 \times 7.0)/(9+4)^{0.5} \times (0.93/0.86) \times (6.7/7.2) +$$
$$(3 \times 6.0)/(1+4)^{0.5} \times (0.88/0.86) \times (6.7/10.2)]/3 = 4.6$$

As this result falls below the output power of the second base station, BS2, (which has an output power of 6.0 watts) by more than 20%, a second parameter signal is composed of e.g. BS2.A4(-20%), which implies that the output power of the second base station, BS2, must be decreased by 1.2 watts to 4.8 watts.

The third parameter signal, destined for the third base station, BS3, could for example be determined as follows. Column B1 of table 1 shows that the first base station, BS1, and the second base station, BS2, and the fourth base station, BS4, are neighbouring base stations to the third base station, BS3. As a result of this, for each of the neighbouring base stations, the aerial height (column A2) in metres is divided by ten and multiplied by the output power (column A4) in watts and divided by the distance (from column A1) in units from the third base station, each of the three figures obtained then being multiplied with the ratio of the handover success rates (column C1) of the neighbouring base station in question relative to those of the third base station, BS3, and with the ratio of the traffic measurements (column C3) of the third base station, BS3, relative to those of the neighbouring base station in question, after which the sum total of the three figures thus obtained is divided by three, and the result is compared with the output power of the third base station, BS3. The result then is:

$$[(2\times8.0)/(1+4)^{0.5}\times(0.74/0.93)\times(7.2/13.4) +$$
$$(3\times6.0)/(9+4)^{0.5}\times(0.86/0.93)\times(7.2/6.7) +$$
$$(3\times6.0)/(4+0)^{0.5}\times(0.88/0.93)\times(7.2/10.2)]/3 = 4.6$$

As this result falls below the output power of the third base station, BS3, (which has an output power of 7.0 watts) by more than 20%, a third parameter signal is composed of e.g. BS3.A4(-20%), which implies that the output power of the third base station, BS3, must be decreased by 1.4 watts to 5.6 watts.

The fourth parameter signal, destined for the fourth base station, BS4, could for example be determined as follows. Column B1 of table 1 shows that the first base station, BS1, and the second base station, BS2, and the third base station, BS3, are neighbouring base stations to the fourth base station, BS4. As a result of this, for each of the neighbouring base stations, the aerial height (column A2) in metres is divided by ten and multiplied by the output power (column A4) in watts and divided by the distance (from column A1) in units from the fourth base station, each of the three figures obtained then being multiplied with the ratio of the handover success rates (column C1) of the neighbouring base station in question relative to those of the fourth base station, BS4, and with the ratio of the traffic measurements (column C3) of the fourth base station, BS4, relative to those of the neighbouring base station in question, after which the sum total of the three figures thus obtained is divided by three, and the result is compared with the output power of the fourth base station, BS4. The result then is:

$$[(2\times8.0)/(1+4)^{0.5}\times(0.74/0.88)\times(10.2/13.4) +$$
$$(3\times6.0)/(1+4)^{0.5}\times(0.86/0.8)\times(10.2/6.7) +$$
$$(2.6\times7.0)/(4+0)^{0.5}\times(0.93/0.88)\times(10.2/7.2)]/3 = 10.1$$

As this result exceeds the output power of the fourth base station, BS4, (which has an output power of 6.0 watts) by more than 20%, a fourth parameter signal is composed of e.g. BS4.A4(+20%), which implies that the output power of the fourth base station, BS4, must be increased by 1.2 watts to 7.2 watts.

Of course, many alternatives to the above can be envisaged. For instance, the four parameter signals, instead of being instantaneously transmitted to the four base stations, could also be transmitted after some delay, each of the four calculations possibly being performed several times, taking into account the adjusted output powers. The output powers could also be adjusted in any way other than the described above, e.g. by adjusting the output power as a function (e.g. linear) of the percentage calculated, or by adjusting the output power, depending on the value calculated, with a different, fixed value, or e.g. by adjusting the output power even if the percentage calculated does not exceed a certain threshold value. Furthermore, the geographical coordinates included in column A1 and the aerial heights included in column A2 and the output powers included in column A4 could be included in any other manner in the calculations described above, and the aerial directions included in column A3 and the cell types included in column A5 could be included in the calculations described above, e.g. by, instead of dividing the sum total of the three figures obtained by three, dividing each of the three figures obtained by a factor depending on the information contained in column A3 and in column A5. Finally, the information yet to be placed in column A6 and in column B2 could be included in any manner in the calculations described above.

The description above applies only to parameter signals for the purpose of adjusting output powers. In a similar manner however, further parameter signals can be envisaged that may possibly change e.g. so-called handover margins (field strength threshold values that determine when a handover becomes necessary), measuring times (times at which a base station starts to measure a mobile terminal), and terminal output powers (the output power of a terminal that is set by a base station).

As mentioned previously, the four parameter signals, instead of being instantaneously transmitted to the four base stations, could also be transmitted after some delay, each of the four calculations possibly being performed several times, taking into account the results obtained. Both the execution of a (new) set of calculations and the actual transmission of (new) parameter signals should then take place in response to one or more trigger signals. Such a trigger signal can be realized in a number of different manners, e.g. by detecting the lapse of a previously set time interval, and/or by detecting the reaching of a certain quality threshold, and/or by the detection of occurring interference, and/or by responding to adjustments that have or still need to be made, e.g. a change in a geographical position, or in an aerial height, or in a cell type, or in an aerial direction, or in a handover class, or e.g. the introduction of a new administrative signal, or a new measuring result signal, or a new parameter signal. Generally speaking therefore, there are two types of trigger signals, predictable trigger signals and unpredictable trigger signals.

The transmission of the parameter signals from the processor device (e.g. an OMC [Operational Maintenance Centre] or [a part of] an MSC [Mobile Switching Centre] or [a part of] an LE [Local Exchange], etc.) to the telecommunication nodes (e.g. base stations or BSCs [Base Station Controllers] etc.) generally takes place via a so-called management network, which is separated from the so-called voice network. However, said voice network should not be excluded as far as the transmission of the parameter signals is concerned.

**Claims**

1. A telecommunication system comprising at least a first telecommunication node defined by a first code (BS1), a second telecommunication node defined by a second code (BS2), and a processor device (OMC) arranged for being linked with the telecommunication nodes for transmitting a first parameter signal in the direction of the first telecommunication node, and a second parameter signal in the direction of the second telecommunication node, said processor device being provided with a memory facility (1) comprising at least a first memory field relating to the first code (BS1), and a second memory field relating to the second code (BS2), for storing,

   at a first location (A1-A6) in the first memory field, a first administrative signal,

   at a second location (B1-B2, C1-C5) in the first memory field, a first further code that defines a telecommunication node (BS2, BS3, BS4) located in the vicinity of the first telecommunication node,

   at a first location (A1-A6) in the second memory field, a second administrative signal, and

   at a second location (B1-B2, C1-C5) in the second memory field, a second further code that defines a telecommunication node located in the vicinity of the second telecommunication node,

   **characterized in that** the processor device is provided with a processor (2) for calculating

   the first parameter signal as a function of at least the first administrative signal and a first signal, being related to the telecommunication node located in the vicinity of said first telecommunication node, that is stored in a memory field relating to the first further code, and

   the second parameter signal as a function of at least the second administrative signal and a second signal, being related to the telecommunication node located in the vicinity of said first telecommunication node, that is stored in a memory field relating to the second further code,

   said first and second parameter signals being signals for setting the transmission power of the first and second telecommunication nodes, respectively.

2. A telecommunication system according to claim 1, **characterized in that** the processor device is designed for the reception of a first measuring result signal from the direction of the first telecommunication node, and a second measuring result signal from the direction of the second telecommunication node, the memory facility being designed for

   storing the first measuring result signal in the first memory field at a third location,

   storing the second measuring result signal in the second memory field at a third location,

   and the processor being designed for the calculation of

   the first parameter signal additionally as a function of at least the first measuring result signal, and

   the second parameter signal additionally as a function of at least the second measuring result signal.

3. A telecommunication system according to claim 2, **characterized in that** the first measuring result signal comprises at least first handover information, the second measuring result signal comprising at least second handover information.

4. A telecommunication system according to claim 1, 2, or 3,

**characterized in that** the first parameter signal is at least a function of first coverage information derived from the first administrative signal, the second parameter signal being at least a function of second coverage information derived from the second administrative signal.

5. A telecommunication system according to claim 1, 2, 3, or 4,
**characterized in that** the first administrative signal comprises at least first aerial information, the second parameter signal comprising at least second aerial information.

6. Processor device (OMC) arranged for being linked to at least a first telecommunication node defined by a first code (BS1), and to at least a second telecommunication node defined by a second code (BS2), for transmitting a first parameter in the direction of the first telecommunication node, and a second parameter signal in the direction of the second telecommunication node, said processor device being provided with a memory facility (1) comprising at least a first memory field relating to the first code (BS1), and a second memory field relating to the second code (BS2), for storing:

at a first location (A1-A6) in the first memory field, a first administrative signal,
at a second location (B1-B2, C1-C5) in the first memory field, a first further code that defines a telecommunication node (BS2, BS3, BS4) located in the vicinity of the first telecommunication node,
at a first location (A1-A6) in the second memory field, a second administrative signal, and
at a second location (B1-B2, C1-C5) in the second memory field, a second further code that defines a telecommunication node located in the vicinity of the second telecommunication node,

**characterized in that** the processor device is provided with a processor (2) for calculating
the first parameter signal as a function of at least the first administrative signal and a first signal, being related to the telecommunication node located in the vicinity of said first telecommunication node, that is stored in a memory field relating to the first further code, and
the second parameter signal as a function of at least the second administrative signal and a second signal, being related to the telecommunication node located in the vicinity of said second telecommunication node, that is stored in a memory field relating to the second further code,
said first and second parameter signals being signals for setting the transmission power of the first and second telecommunication nodes, respectively.

7. A processor device according to claim 6, **characterized in that** the processor device is designed for the reception of a first measuring result signal from the direction of the first telecommunication node, and a second measuring result signal from the direction of the second telecommunication node, the memory facility being designed for
storing the first measuring result signal in the first memory field at a third location,
storing the second measuring result signal in the second memory field at a third location,
and the processor being designed for the calculation of
the first parameter signal additionally as a function of at least the first measuring result signal, and
the second parameter signal additionally as a function of at least the second measuring result signal.

8. A processor device according to claim 7, **characterized in that** the first measuring result signal comprises at least first handover information, the second measuring result signal comprising at least second handover information.

9. A processor device according to claim 6, 7, or 8, **characterized in that** the first parameter signal is at least a function of first coverage information derived from the first administrative signal, the second parameter signal being at least a function of second coverage information derived from the second administrative signal.

10. A processor device according to claim 6, 7, 8, or 9, **characterized in that** the first parameter signal comprise at least first aerial information, the second parameter signal comprising at least second aerial information.


**Patentansprüche**

1. Telekommunikationsvorrichtung umfassend mindestens einen durch einen ersten Code definierten ersten Telekommunikationsknoten (BS1), einen durch einen zweiten Code definierten zweiten Telekommunikationsknoten (BS2) und eine Prozessorvorrichtung (OMC), angeordnet, um mit den Telekommunikationsknoten verbunden zu werden, um ein erstes Parametersignal in der Richtung des ersten Telekommunikationsknotens und ein zweites Parametersignal in der Richtung des zweiten Telekommunikationsknotens zu übermitteln, wobei das besagte Prozessormittel mit einem Speichermittel (1) ausgestattet ist, umfassend mindestens ein auf den ersten Code (BS1) bezogenes erstes Speicherfeld, und ein auf den zweiten Code (BS2) bezogenes zweites Speicherfeld, für die Speicherung

- eines ersten Administrativ-Signals an einem ersten Ort (A1-A6) im ersten Speicherfeld,
- eines ersten weiteren Codes, welcher einen in der Nähe des ersten Telekommunikationsknotens angeordneten Telekommunikationsknoten (BS2, BS3, BS4) definiert, an einem zweiten Ort (B1-B2, C1-C5) im ersten Speicherfeld,
- eines zweiten Administrativ-Signals an einem ersten Ort (A1-A6) im zweiten Speicherfeld, und
- eines zweiten weiteren Codes, welcher einen in der Nähe des zweiten Telekommunikationsknoten angeordneten Telekommunikationsknoten definiert, an einem zweiten Ort (B1-B2, C1-C5) im ersten Speicherfeld,

**dadurch gekennzeichnet, dass** das Prozessormittel mit einem Prozessor (2) ausgestattet ist, für die Berechnung:

- vom ersten Parametersignal als eine Funktionen von mindestens dem ersten Administrativ-Signal und einem auf den Telekommunikationsknoten bezogenen ersten Signal, der in der Nähe des besagten ersten Telekommunikationsknotens angeordnet ist, welcher in einem auf den ersten weiteren Code bezogenen Speicherfeld gespeichert wird, und
- vom zweiten Parametersignal als eine Funktionen von mindestens dem zweiten Administrativ-Signal und einem auf den Telekommunikationsknoten bezogenen zweiten Signal, der in der Nähe des besagten ersten Telekommunikationsknotens angeordnet ist, welches in einem auf den zweiten weiteren Code bezogenen Speicherfeld gespeichert wird,

wobei besagtes erstes und zweites Parametersignal Signale sind, um jeweils die Übertragungsleistung des ersten bzw. zweiten Telekommunikationsknotens einzustellen.

2. Telekommunikationsvorrichtung nach Anspruch 1, **dadurch gekennzeichnet, dass** die Prozessorvorrichtung für den Empfang eines ersten Messresultat-Signals von der Richtung eines ersten Telekommunikationsknotens und eines zweiten Messresultat Signals von der Richtung eines zweiten Telekommunikationsknotens ausgestaltet ist, wobei die Speichermittel ausgestaltet sind für

- Speicherung des ersten Messresultat-Signals im ersten Speicherfeld an einem dritten Ort,
- Speicherung des zweiten Messresultat-Signals im zweiten Speicherfeld an einem dritten Ort,

und wobei der Prozessor ausgestaltet ist für die Berechnung von

- dem ersten Parametersignal, zusätzlich als eine Funktion von mindestens dem ersten Messresultat-Signal, und
- dem zweiten Parametersignal, zusätzlich als eine Funktion von mindestens dem zweiten Messresultat-Signal.

3. Telekommunikationsvorrichtung nach Anspruch 2, **dadurch gekennzeichnet, dass** das erste Messresultat-Signal mindestens erste Weiterreichungs-Informationen umfasst, und dass das zweite Messresultat-Signal mindestens zweite Weiterreichungs-Informationen umfasst.

4. Telekommunikationsvorrichtung nach Anspruch 1, 2, oder 3, **dadurch gekennzeichnet, dass** das erste Parametersignal mindestens eine Funktion der von dem ersten Administrativ-Signal abgeleiteten ersten Abdeckungsinformation ist, und dass das zweite Parametersignal mindestens eine Funktion der von dem zweiten Administrativ-Signal abgeleiteten zweiten Abdeckungsinformation ist.

5. Telekommunikationsvorrichtung nach Anspruch 1, 2, 3, oder 4, **dadurch gekennzeichnet, dass** das erste Administrativ-Signal mindestens erste Antenneninformationen umfasst, und dass das zweite Parametersignal mindestens zweite Antenneninformationen umfasst.

6. Prozessormittel (OMC), angeordnet, um mit mindestens einem durch einen ersten Code definierten ersten Telekommunikationsknoten (BS1), und mit mindestens einem durch einen zweiten Code definierten zweiten Telekommunikationsknoten (BS2) verbunden zu werden, um einen ersten Parameter in der Richtung des ersten Telekommunikationsknotens und ein zweites Parametersignal in der Richtung des zweiten Telekommunikationsknoten zu übermitteln, wobei besagtes Prozessormittel mit einem Speichermittel (1) ausgestattet ist, umfassend mindestens ein auf den ersten Code (BS1) bezogenes erstes Speicherfeld, und ein auf den zweiten Code (BS2) bezogenes zweites Speicherfeld, für Speicherung

- eines ersten Administrativ-Signals an einem ersten Ort (A1-A6) im ersten Speicherfeld,
- eines ersten weiteren Codes, welcher einen in der Nähe des ersten Telekommunikationsknotens angeordneten Telekommunikationsknoten (BS2, BS3, BS4) definiert, an einem zweiten Ort (B1-B2, C1-C5) im ersten Speicherfeld,
- eines zweitens Administrativ-Signal an einem ersten Ort (A1-A6) im zweiten Speicherfeld, und
- eines zweiten weiteren Codes, welcher einen in der Nähe des zweiten Telekommunikationsknoten angeordneten Telekommunikationsknoten definiert, an einem zweiten Ort (B1-B2, C1-C5) im ersten Speicherfeld,

**dadurch gekennzeichnet, dass** das Prozessormittel mit einem Prozessor (2) ausgestattet ist, für die Berechnung:

- vom ersten Parametersignal als eine Funktionen von mindestens dem ersten Administrativ-Signal und einem auf den ersten Telekommunikationsknoten bezogenen ersten Signal, angeordnet in der Nähe des besagten ersten Telekommunikationsknotens, das in einem auf den ersten weiteren Code bezogenen Speicherfeld gespeichert wird, und
- vom zweiten Parametersignal, als eine Funktionen von mindestens dem zweiten Administrativ-Signal und einem auf den zweiten Telekommunikationsknoten bezogenen zweiten Signal, angeordnet in der Nähe des besagten ersten Telekommunikationsknotens, das in einem auf den zweiten weiteren Code bezogenen Speicherfeld gespeichert wird,

wobei besagte erste und zweite Parametersignale Signale sind, um die Übertragungsleistung des ersten bzw. zweiten Telekommunikationsknotens einzustellen.

7. Prozessormittel nach Anspruch 6, **dadurch gekennzeichnet, dass** die Prozessorvorrichtung für den Empfang eines ersten Messresultat-Signals von der Richtung eines ersten Telekommunikationsknotens und eines zweiten Messresultat-Signals von der Richtung eines zweiten Telekommunikationsknotens ausgestaltet ist, wobei die Speichermittel ausgestaltet sind für

- Speicherung des ersten Messresultat-Signals im ersten Speicherfeld an einem dritten Ort,
- Speicherung des zweiten Messresultat-Signals im zweiten Speicherfeld an einem dritten Ort,

und der Prozessor ausgestaltet ist für die Berechnung von

- dem ersten Parametersignal, zusätzlich als eine Funktion mindestens des ersten Messresultat-Signals, und
- dem zweiten Parametersignal, zusätzlich aus einer Funktionen mindestens des zweiten Messresultat-Signals.

8. Prozessorvorrichtung nach Anspruch 7, **dadurch gekennzeichnet, dass** das erste Messresultat-Signal mindestens erste Weiterreichungs-Informationen umfasst, und dass das zweite Messresultat-Signal mindestens zweite Weiterreichungs-Informationen umfasst.

9. Prozessorvorrichtung nach Anspruch 6, 7, oder 8, **dadurch gekennzeichnet, dass** das erste Parametersignal mindestens eine Funktion der von dem ersten Administrativ-Signal abgeleiteten ersten Abdeckungsinformation ist, und dass das zweite Parametersignal mindestens eine Funktion der von dem zweiten Administrativ-Signal abgeleiteten zweiten Abdeckungsinformation ist.

10. Prozessorvorrichtung nach Anspruch 6, 7, 8, oder 9, **dadurch gekennzeichnet, dass** das erste Administrativ-Signal mindestens erste Antenneninformationen umfasst, und dass das zweite Parametersignal mindestens zweite Antenneninformationen umfasst.

## Revendications

1. Système de télécommunication comprenant au moins un premier noeud de télécommunication défini par un premier code (BS1), un second noeud de télécommunication défini par un second code (BS2), et un dispositif à processeur (OMC) agencé de manière à être relié aux noeuds de télécommunication pour transmettre un premier signal de paramètre en direction du premier noeud de télécommunication, et un second signal de paramètre en direction du second noeud de télécommunication, ledit dispositif à processeur étant pourvu d'une installation de mémoire (1) comprenant au moins une première zone de mémoire associée au premier code (BS1) et une seconde zone de mémoire associée au second code (BS2), pour mémoriser
en un premier emplacement (A1-A6) dans la première zone de mémoire, un premier signal de gestion,
en un second emplacement (B1-B2, C1-C5) dans la première zone de mémoire, un premier autre code qui définit un noeud de télécommunication (BS2,BS3,BS4) situé au voisinage du premier noeud de télécommunication,
en un premier emplacement (A1-A6) dans la seconde zone de mémoire, un second signal de gestion, et
en un second emplacement (B1-B2, C1-C5) dans la seconde zone de mémoire, un second autre code qui définit un noeud de télécommunication situé au voisinage du second noeud de télécommunication,
**caractérisé en ce que** le dispositif à processeur est équipé d'un processeur (2) pour calculer
un premier signal de paramètre en fonction au moins du premier signal de gestion et d'un premier signal, en étant associé au noeud de télécommunication situé au voisinage dudit premier noeud de télécommunication, qui est mémorisé dans une mémoire associée au premier autre code, et
un second signal de paramètre en fonction au moins du premier signal de gestion et d'un premier signal, en étant associé au noeud de télécommunication situé au voisinage dudit premier noeud de télécommunication, qui est mémorisé dans une mémoire associée au second autre code,
lesdits premier et second signaux de paramètre sont des signaux pour régler la puissance de transmission respectivement des premier et second noeuds de télécommunication.

2. Système de télécommunication selon la revendication 1, **caractérisé en ce que** le dispositif à processeur est conçu pour la réception du signal de mesure à partir de la direction du premier noeud de télécommunication, et un second signal de résultat de mesure provenant de la direction du second noeud de télécommunication, l'installation de mémoire étant conçue pour
mémoriser le premier signal de résultat de mesure dans la première zone de mémoire en un troisième emplacement,
mémoriser le second signal de résultat de mesure dans la seconde zone de mémoire en un troisième emplacement, et le processeur étant conçu pour le calcul
du premier signal de paramètre, en supplément, en fonction d'au moins le premier signal de résultat de mesure, et du second signal de paramètre, de façon additionnelle, en fonction au moins du second signal de résultat de mesure.

3. Système de télécommunication selon la revendication 2, **caractérisé en ce que** le premier signal de résultat de mesure comprend au moins une première information de transfert, le second signal de résultat de mesure comprenant au moins une seconde information de transfert.

4. Système de télécommunication selon la revendication 1, 2 ou 3, **caractérisé en ce que** le premier signal de paramètre est au moins une fonction d'une première information de couverture dérivée du premier signal de gestion, le second signal de paramètre étant au moins une fonction de la seconde information de couverture dérivée du second signal de gestion.

5. Système de télécommunication selon la revendication 1, 2, 3 ou 4, **caractérisé en ce que** le premier signal de gestion comprend au moins une information d'antenne, et le second signal de paramètre comprenant au moins une information de seconde antenne.

6. Dispositif à processeur (OMC) agencé pour être relié à au moins un premier noeud de télécommunication défini par un code (BS1) et à au moins un second noeud de télécommunication défini par un second code (BS2), pour transmettre un premier paramètre en direction du premier noeud de communication, et un second signal de paramètre en direction du second noeud de télécommunication, ledit dispositif à processeur étant pourvu d'une installation de mémoire (1) comprenant au moins une première zone de mémoire associée au premier code (BS1) et une seconde zone de mémoire associée au second code (BS2), pour mémoriser :

en un premier emplacement (A1-A6) dans la première zone de mémoire, un premier signal de gestion,
en un second emplacement (B1-B2, C1-C5) dans la première zone de mémoire, un premier autre code qui définit un noeud de télécommunication (BS2,BS3,BS4) situé au voisinage du premier noeud de télécommunication,
en un premier emplacement (A1-A6) dans la seconde zone de mémoire, un second signal de gestion, et
en un second emplacement (B1-B2, C1-C5) dans la seconde zone de mémoire, un second autre code qui définit un noeud de télécommunication situé au voisinage du second noeud de télécommunication,

**caractérisé en ce que** le dispositif à processeur est équipé d'un processeur (2) pour calculer
un premier signal de paramètre en fonction au moins du premier signal de gestion et d'un premier signal, en étant associé au noeud de télécommunication situé au voisinage dudit premier noeud de télécommunication, qui est mémorisé dans une mémoire associée au premier autre code, et

un second signal de paramètre en fonction au moins du premier signal de gestion et d'un premier signal, en étant associé au noeud de télécommunication situé au voisinage dudit premier noeud de télécommunication, qui est mémorisé dans une mémoire associée au second autre code,

lesdits premier et second signaux de paramètre sont des signaux pour régler la puissance de transmission respectivement des premier et second noeuds de télécommunication.

7. Dispositif à processeur selon la revendication 6, **caractérisé en ce que** le dispositif à processeur est conçu pour la réception du signal de mesure dans la direction du premier noeud de télécommunication, et un second signal de résultat de mesure dans la direction du second noeud de télécommunication, l'installation de mémoire étant conçue pour

mémoriser le premier signal de résultat de mesure dans la première zone de mémoire en un troisième emplacement,

mémoriser le second signal de résultat de mesure dans la seconde zone de mémoire en un troisième emplacement, et le processeur étant conçu pour le calcul

du premier signal de paramètre, en supplément, en fonction d'au moins le premier signal de résultat de mesure, du second signal de paramètre, en supplément en fonction au moins du second signal de résultat de mesure.

8. Dispositif à processeur selon la revendication 7, **caractérisé en ce que** le premier signal de résultat de mesure comprend au moins une première information de transfert, le second signal de résultat de mesure comprenant au moins une seconde information de transfert.

9. Dispositif à processeur selon la revendication 6, 7 ou 8, **caractérisé en ce que** le premier signal de paramètre est au moins une fonction d'une première information de couverture dérivée du premier signal de gestion, le second signal de paramètre étant au moins une fonction de la seconde information de couverture dérivée du second signal de gestion.

10. Dispositif à processeur selon la revendication 6, 7, 8 ou 9, **caractérisé en ce que** le premier signal de gestion comprend au moins une première information d'antenne, et le second signal de paramètre comprenant au moins une seconde information d'antenne.

FIG. 1

| | A1 | A2 | A3 | A4 | A5 | A6 | B1 | B2 | C1 | C2 | C3 | C4 | C5 |
|---|---|---|---|---|---|---|---|---|---|---|---|---|---|
| BS 1 | | | | | | | | | | | | | |
| BS 2 | | | | | | | | | | | | | |
| BS 3 | | | | | | | | | | | | | |
| BS 4 | | | | | | | _1_ | | | | | | |

FIG. 2